Europäisches Patentamt

**European Patent Office** (11) Publication number: **0 016 819**

Office européen des brevets **B1**

(12) **EUROPEAN PATENT SPECIFICATION**

(45) Date of publication of patent specification: **15.02.84** (51) Int. Cl.³: **F 01 D 5/04**

(21) Application number: **79901172.1**

(22) Date of filing: **24.08.79**

(86) International application number:
**PCT/US79/00652**

(87) International publication number:
**WO 80/00468 20.03.80 Gazette 80/6**

(54) **TURBOMACHINE.**

| | |
|---|---|
| (30) Priority: **25.08.78 US 936695**<br>**06.08.79 US 63669** | (73) Proprietor: **Cummins Engine Company, Inc.**<br>**1000 Fifth Street**<br>**Columbus, Indiana 47201 (US)** |
| (43) Date of publication of application:<br>**15.10.80 Bulletin 80/21** | (72) Inventor: **FLYNN, Patrick F.**<br>**2020 Layfayette Street**<br>**Columbus, IN 47201 (US)**<br>Inventor: **MULLOY, John M.** |
| (45) Publication of the grant of the patent:<br>**15.02.84 Bulletin 84/7** | **1405 Locust Drive**<br>**Columbus, IN 47201 (US)**<br>The other inventor has agreed to waive his<br>entitlement to designation |
| (84) Designated Contracting States:<br>**CH DE FR GB SE** | |
| | (74) Representative: **Wilson, Nicholas Martin et al,**<br>**WITHERS & ROGERS 4 Dyer's Buildings Holborn**<br>**London EC1N 2JT (GB)** |
| (56) References cited:<br>**CA - A - 568 031**<br>**FR - A - 776 676**<br>**FR - A - 1 097 276**<br>**US - A - 2 037 880**<br>**US - A - 2 484 554**<br>**US - A - 2 570 081**<br>**US - A - 2 576 700**<br>**US - A - 3 077 075**<br>**US - A - 3 232 580**<br>**US - A - 3 529 631**<br>**US - A - 3 788 765**<br>**US - A - 3 984 193** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Turbomachine

This invention relates to a turbomachine.

Turbomachines have been used since the turn of the century to increase the energy level of a fluid in response to a rotating input, or to provide a rotatable output by extracting energy from a moving fluid. This is accomplished by directing a fluid flow through a series of appropriately shaped flow channels or passageways. A common objective has been to achieve a wide range of useable fluid flow rates.

Past attempts to extend the range of turbomachines of the type described have included variable geometry in the inlet and/or outlet section of such a turbomachine. However, these have the disadvantage of increased cost and complexity and are susceptible of malfunction. One attempt to achieve range extension with fixed geometry is the backward curvature impeller with backward leaning blades. Such a design approach offers only limited range extension at comparable wheel speeds, and then only at larger wheel diameters resulting in greater stress.

The useful operating range of a turbomachine at a given pressure ratio (ie outlet pressure divided by inlet pressure) is limited by two phenomena known as choke and surge. Choke limits the maximum amount of fluid mass flow which can pass through a given compressor and is normally caused by the flows reaching a mean velocity near sonic at some point in the flow path through the compressor. Surge, on the other hand, limits the minimum stable fluid mass flow ratio which can be obtained at a given pressure ratio. Operating the turbomachine in the surge condition results in a severely unstable pulsating flow.

Within the usual operating range for a conventional centrifugal compressor, there my be a 30% to 40% variation in mass flow rate through the machine for a given turbomachine pressure ratio. If such a turbomachine is used in an application requiring variations in mass flow rates at given pressure ratios, the range of operation is limited to that between surge and choke. For example, when such a turbomachine is used as a turbocharger compressor, this variation limits the peak torque revolutions per minute of a reciprocating engine being serviced by the turbomachine to approximately 60% of its rated power revolutions per minute.

Another example of a known turbomachine is disclosed in U.S. Patent No. 3232580. In that specification a turbomachine has blades with a bulbous inlet portion and a converging discharge edge defining a plurality of flow paths. However, the nature of the passageways is such that there is a continuous decrease in orthogonal passage area from inlet to outlet.

It is an object of the invention to provide an improved turbomachine of the type described which significantly increases the useful range of fluid mass flow rates at any given pressure ratio.

Therefore, in accordance with the present invention there is provided a turbomachine for compressible fluids comprising a rotor mounted for rotation about a substantially central transverse axis, said rotor including a hub, and a plurality of vanes mounted on and projecting from one surface of said hub, each vane being between the rotor axis and the rotor periphery and having a generally rounded vane end at said periphery smoothly merging with said vane, adjacent vanes coacting to define at least in part a fluid passageway having a generally axially oriented section adjacent the rotor axis and a generally radially oriented section extending from said axially oriented section to the rotor periphery; characterised in that a predetermined number of passageways are provided, each having a reference station within the radially oriented section thereof and upstream of the passageway exit, said reference station being a generally convex protrusion from said vane into said passageway oriented to reduce said passageway in the tangential dimension only, thereby reducing vane-to-vane spacing only, the passageway height or axial dimension at said reference station being increased to compensate for the passageway area reduction which would have been caused by solely reducing the tangential dimension, the passageway configuration at said reference station having a mean tangential dimension that is no more than about 60% of the mean circumference of the rotor measured at said reference station divided by the number of vanes intersecting said circumference.

The invention will now be described by way of example with reference to the accompanying drawings in which:

Fig. 1 is a fragmentary cross-sectional view of one form of the improved turbomachine taken in a generally axial direction through oppositely disposed passageways.

Fig. 2 is a perspective top view of an embodiment of the improved turbomachine compressor rotor.

Fig. 2A is a top plan view of the compressor rotor of Fig. 1.

Fig. 3 is a top plan view of an alternative embodiment of the improved turbomachine compressor rotor.

Fig. 4 is a fragmentary perspective top view of a rotor including a fluid velocity profile for a particular mass flow rate.

Fig. 5 is a top plan view of a standard turbomachine compressor rotor.

Fig. 6 is a graph comprising the operating characteristics of a standard turbomachine not incorporating the teachings of the present invention compared to an improved turbomachine which does incorporate the teachings of the present invention.

Fig. 7 is a fragmentary perspective top view of a standard turbomachine rotor including fluid flow profiles.

Fig. 8 is a fragmentary perspective top view of an improved turbomachine rotor including fluid flow profiles.

Fig. 9 is a top plan view of an improved turbomachine turbine rotor including a reference station and a rounded inlet vane end.

Figs. 10 and 11 are top plan views of alternative embodiments of improved turbomachine turbine rotors including reference stations and rounded inlet vane ends.

Fig. 12 is a graph of mass flow versus rotor speed comparing a standard turbomachine to improved turbomachines incorporating the rotors of Figs. 7—9.

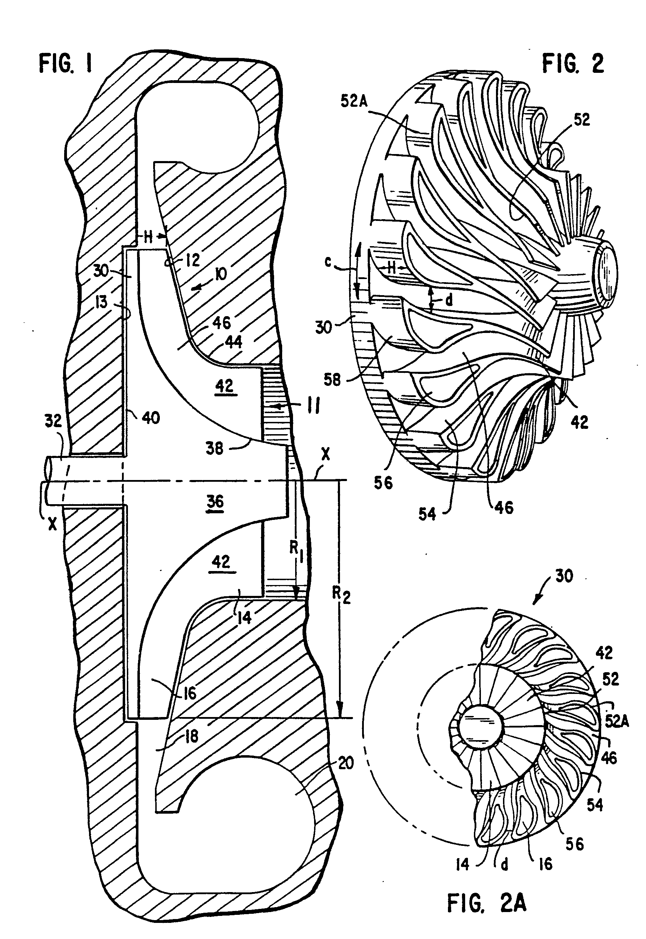

Referring now to Fig. 1, one form of the improved turbomachine 10 is shown which comprises a housing 12 having a chamber or cavity 13 in which a rotor 30 is mounted about an axis X—X. The housing cavity 13 is provided with an inlet 11 through which a compressible fluid flows from a suitable source, not shown. The entering fluid passes through the inlet 11 in a substantially axial direction relative to the axis of the rotor and is discharged from the cavity 13 through a peripheral outlet 20. In flowing from the inlet to the outlet the fluid flows successively through an axial section 14, and a radially oriented section 16; these sections defining at least in part flow passages. A discharge section 18 may be provided which coacts with the outlet 20 to form a voluted flow path. The configuration of the housing cavity 13 is dependent upon the configuration of the rotor 30. As an alternative to the housing an imperforate shroud may be attached to the rotor 30.

Rotor 30 is provided with a suitably journaled shaft 32 extending axially from one side thereof. When the rotor is a turbocharger compressor, the shaft 32 will normally be connected to a turbine wheel, not shown. It is to be noted that other rotary inputs may be utilized to drive the rotor. Rotor 30 has a hub 36 with a first face 38 exposed to the entering fluid and a second face 40 from which the shaft 32 projects. As illustrated in Fig. 1, the hub 36 has a sloped, generally truncated triangular cross-sectional configuration when an axial section is taken of the rotor 30. A plurality of symmetrically arranged vanes 42 are mounted on and project outwardly from the first face 38. It is to be understood that the symmetrical arrangement of the vanes is not critical. The vanes 42 form a generally fluid-tight seal 44 with the surface of the housing cavity 13 or the shroud, as the case may be, and define a plurality of continuous fluid passageways 46 having generally axially and radially oriented sections 14, 16.

The portions of the vanes 42 disposed in the section 14 comprise an inducer section of the turbomachine 10 and the portion of the vanes 42 disposed within section 16 comprise a radial flow section. The maximum radius $R_2$ of the radial flow section is greater than the maximum radius $R_1$ of the inducer section, see Fig. 1. The entering fluid reacts with the inducer section before entering the radial flow section and is oriented thereby. The axial and radial flow sections for each passageway 46 are disposed in contiguous relation.

Referring to Figs. 2 and 2A, vanes 42 are shown curving from within the inducer section to the outer periphery of the rotor 30. In the illustrated embodiment, the pressure side 52 of each vane 42 in the axial section 14 is generally concave; while the pressure side 52A is generally convex in the radial section 16. This streamlined curving shape provides an efficient energy transfer from the fluid to the rotor 30, or vice versa, as the fluid, which is generally inviscid and irrotational, has its direction of flow smoothly altered from axial to radial with respect to the rotor 30. It is to be noted that the surface configuration of the pressure sides of the vanes, as a matter of choice, may vary substantially from that shown without adversely affecting performance.

The configuration and number of passageways are determined by the total amount of fluid (mass flow rate) to be passed through the turbomachine, and the equation of state and ratio of specific heats for the fluid. The equation of state for said fluid is a function of its unique internal structure and is normally expressed as pv=RT where p is the pressure of the gas, v is the specific volume of the gas, R is the specific gas constant, and T is the temperature. The ratio of specific heats for said fluid is the ratio of the change in enthalpy with respect to temperature divided by the change in internal energy with respect to temperature (dh/dT)/(du/dT). The total volume of fluid that passes through the turbomachine at any given pressure is the sum of the flow through each passageway formed in the turbomachine. Each passageway 46 has a tangential dimension, or vane-to-vane spacing $d$, and a height $H$, both of which may vary with respect to any position along the length of the passageway.

The velocity and pressure patterns of characteristics of the improved turbomachine maximize the attachment of the fluid to the vane surfaces and, thus, significantly enlarge the range of operations over conventional machines of this general type. In areas of separation, or non-attachment, of the fluid with respect to the vane surfaces reversals in flow direction may occur. In some aggravated situations, the fluid may establish an undesirable reverse flow circuit from one passageway into another, via the inlet or outlet.

To maximize and control attachment over a wide range of fluid mass flow rates, or to prevent any reverse fluid flows or interconnection of separation zones along the flow path, a reference station 54 is provided within the radial section 16 of each passageway. The station 54 constricts the passageway in its tangential dimension or blade-to-blade spacing $d$. If desired, the reference stations may be located arbitrarily within the passageways at different radii from the axis of the rotor; however, simplicity of design favors placing a like reference station at the same radius in each passageway. The mean tangential dimension $d$ of each passageway at said reference station 54 is no more than about 60% of the mean circumference of the rotor measured at the reference station divided by the number of vanes intersecting the circumference. It is necessary to reduce the passageway in the tangential dimension to provide the desired attachment. Reducing the cross-sectional area or the dimension H will achieve only a minimal improvement in attachment and then only at the expense of a serious reduction in efficiency and a serious reduction in the choke mass flow rates.

While the said tangential constriction may assume any shape, it is preferably smoothly tapered to conform to the portions of the passageways disposed upstream and downstream thereof. In order to obtain substantially the same maximum mass flow through each passageway of the improved turbomachine, both ahead of and after, as well as at the reference station, it is necessary to increase the passageway height or axial dimension $H$ at the reference station so as to compensate for the area reduction which would have been caused by solely reducing the tangential dimension $d$.

In the illustrated embodiment, in order to attain the desired vane-to-vane spacing $d$ at the reference station, the portion of each vane so disposed in the radial section 16 of the passageway 46 has a transverse cross-sectional configuration 56 which is substantially wedge shaped or bulbous—that is to say, the thickness of the vane increases in the vicinity of the reference station and may diminish thereafter. To reduce the weight of the wheel the vanes in the radial section may be hollow if desired.

In order to demonstrate the use of the tangential dimension to prevent flow reversal at the reference station, a simplified calculation procedure will be outlined. It should be understood that the calculations have been simplified because this is merely an example to demonstrate the framework of the method when applied to a compressor rotor. It is assumed that the flow is inviscid, irrotational, and isentropic, and that the flow upstream of the rotor inducer section is purely axial. It is further assumed that the channel area per vane (A) at the reference station has been selected to satisfy a desired choke mass flow rate.

Fig. 4 shows a flow passageway 70 near the exit portion 72 of the periphery of the rotor 74 with both vane surfaces thereof substantially parallel and radial. It should be noted that the analysis (calculations) hereinafter described can be used for other passageway shapes, but in the selected example, the mathematics is much easier to understand based on the above assumptions. It can be shown that the relative velocity of the fluid in the passageway varies linearly from the suction surface to the pressure surface of the passageway forming vanes, and that the relative radial velocity difference across the passageway in the tangential direction is $2d\omega$, where $\omega$ is the angular velocity of the rotor in radians per unit time.

The passageway can accommodate a range of mass flow rates, but the velocity profile 80 shown is that for the particular mass flow rate which produces a zero relative radial velocity on the pressure surface vane 78. It will be assumed that this is the minimum flow rate necessary at the reference station 82 to control surge. It should also be noted that while Fig. 4 shows the reference station 82 at the periphery of the rotor, this is only for clarity in understanding the example.

With zero relative radial velocity at the pressure surface vane 78, the relative total temperature at this location may be found from:

$$T_{o_{rel}} = T_{o_{in}} + \frac{(r\omega)^2}{2c_p}$$

where

$T_{o_{rel}}$ is the relative total temperature
$T_{o_{in}}$ is the total temperature at the rotor inlet
r is the radius to the reference station
$c_p$ is the specific heat of the fluid at constant pressure (dh/dT).

The relative total pressure at this same point on the pressure surface vane 78 at the reference station 82 can then be found from:

$$P_{o_{rel}} = P_{o_{in}} \left( \frac{T_{o_{rel}}}{T_{o_{in}}} \right)^{\frac{\gamma}{\gamma - 1}}$$

where

$P_{o_{rel}}$ is the relative total pressure at the reference station radius
$P_{o_{in}}$ is the rotor inlet total pressure
$\gamma$ is the specific heat ratio of the fluid (dh/dT)/(du/dT).

Since there is no flow at this point on the pressure surface vane, the static pressure is equal to the relative total pressure at the reference station radius, or

$$P_{s_{pressure\ surface}} = P_{o_{rel}}$$

where

$P_{s_{pressure\ surface}}$ is the static pressure of the fluid at the pressure surface vane at the reference station.

On the suction vane 76 at the reference station 82, the relative radial velocity of the fluid is $2d\omega$ and the local static temperature of the fluid is:

$$T_{s_{suction\ surface}} = T_{o_{in}} + \frac{(r\omega)^2 - (2d\omega)^2}{2c_p}$$

where

$T_{s_{suction\ surface}}$ is the static temperature of the fluid at the suction surface vane at the reference station.

Since the relative fluid velocities at the reference station are assumed to be radial, $T_{o_{ref}}$ is constant across the station and can be found from

$$T_{o_{ref}} = T_{o_{in}} + \frac{(r\omega)^2}{c_p}$$

where

$T_{o_{ref}}$ is the total temperature of the fluid at the reference station.

For isentropic flow,

$$P_{o_{ref}} = P_{o_{in}} \left( \frac{T_{o_{ref}}}{T_{o_{in}}} \right)^{\frac{\gamma}{\gamma - 1}}$$

where

$P_{o_{ref}}$ is the total pressure of the fluid at the reference station

then the static pressure of the fluid at the suction surface vane 76 at the reference station 82 can be found from

$$P_{s_{suction\ surface}} = P_{o_{ref}} \left( \frac{T_{s_{suction\ surface}}}{T_{o_{ref}}} \right)^{\frac{\gamma}{\gamma - 1}}$$

where

$P_{s_{suction\ surface}}$ is the static pressure at the suction surface vane at the reference station.

The following equation can be obtained from a torque balance on the rotor (not shown):

$$P_{s_{pressure\ surface}} - P_{s_{suction\ surface}} = \frac{2\omega m d}{A}$$

where A=dH

where m is the desired mass flow rate per passageway. The above equations can be solved by an iterative process for d, the required tangential dimension of the passageway at the reference stations.

While it may seem possible to provide narrow passageways by adding more vanes, this approach is impractical because of the adverse effects produced in the axial section 14 of the turbomachine. The number of vanes provided on a rotor determines the amount of blockage the vanes will cause at the inlet of the turbomachine. The dimensions of the vanes must be such as to provide sufficient strength and stability to the vanes at high rotational speeds and to control critical vibration frequencies. The inclusion of additional vanes normally requires that the radius $R_1$ of the axial section 14 be increased in order to maintain the same fluid mass flow rate with the result that supersonic inlet fluid flows occur relative to the inducer section vane tips and create a series of

5

shock waves. It has been found that the passage of the fluid through these shock waves causes a significant efficiency degradation. It is also impractical to insert additional vanes as splitters in the radially oriented section because the separation occurring upstream in the inducer would result in some passageways carrying almost no fluid or having a reverse fluid flow.

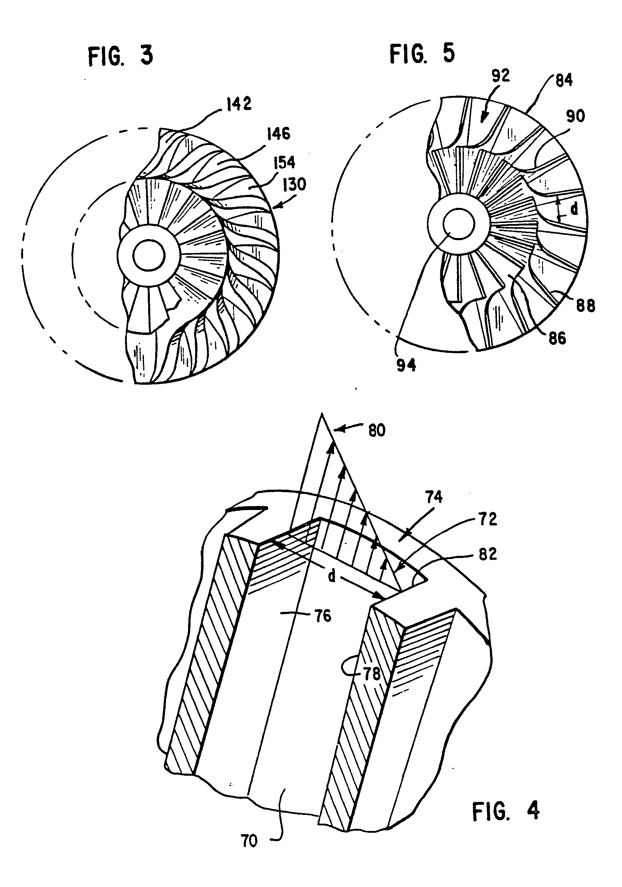

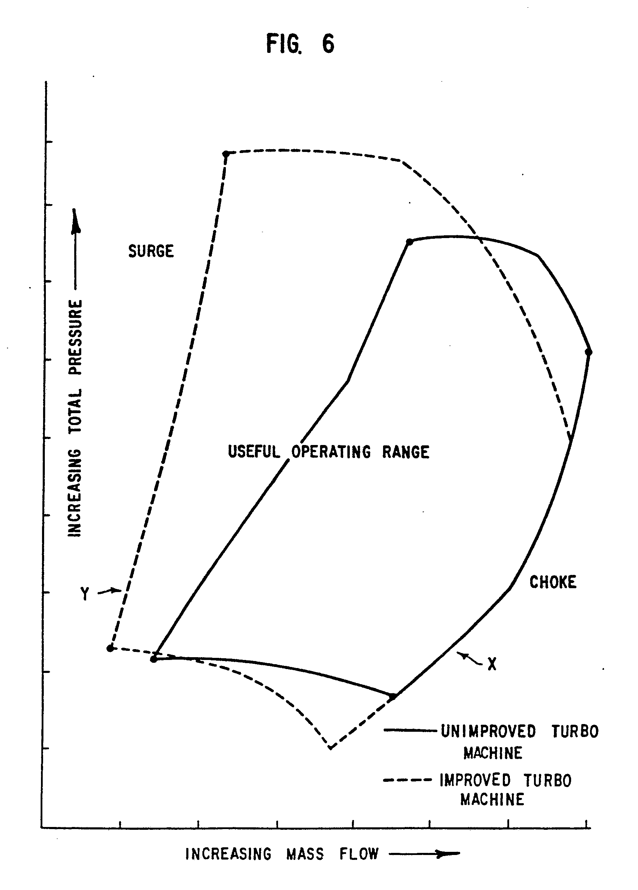

Fig. 3 illustrates an alternative embodiment of the improved rotor 130 wherein the passageways 146 thereof are restricted in the tangential dimension to form reference stations 154 which are disposed closer to the periphery of the rotor than in the case of rotor 30. The configuration of both the vanes and passageways may be further modified from the illustrated embodiments so as to satisfy certain design, stress, and inertia requirements or limitations.

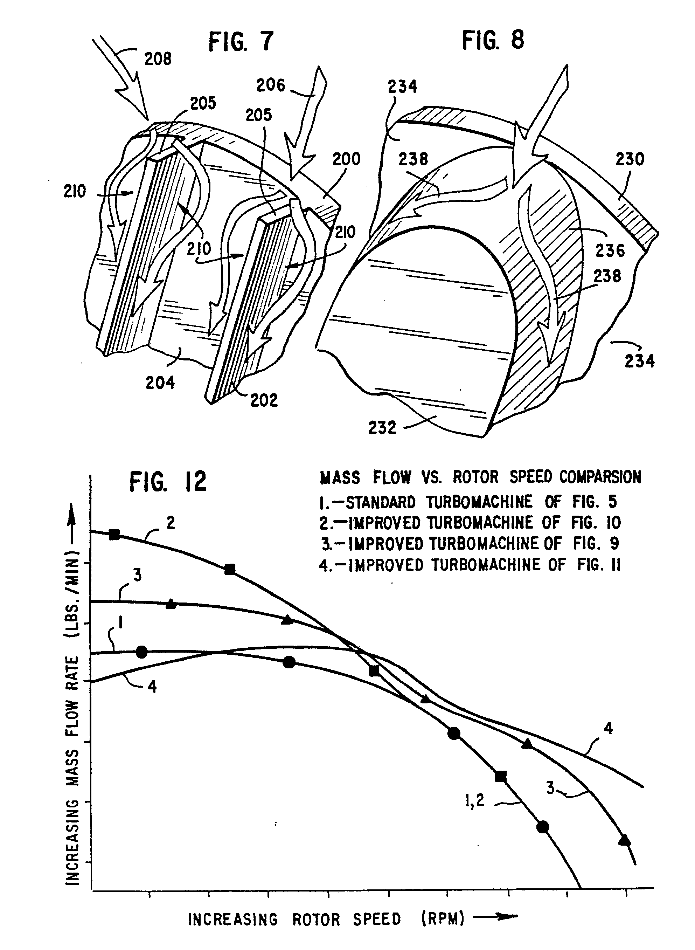

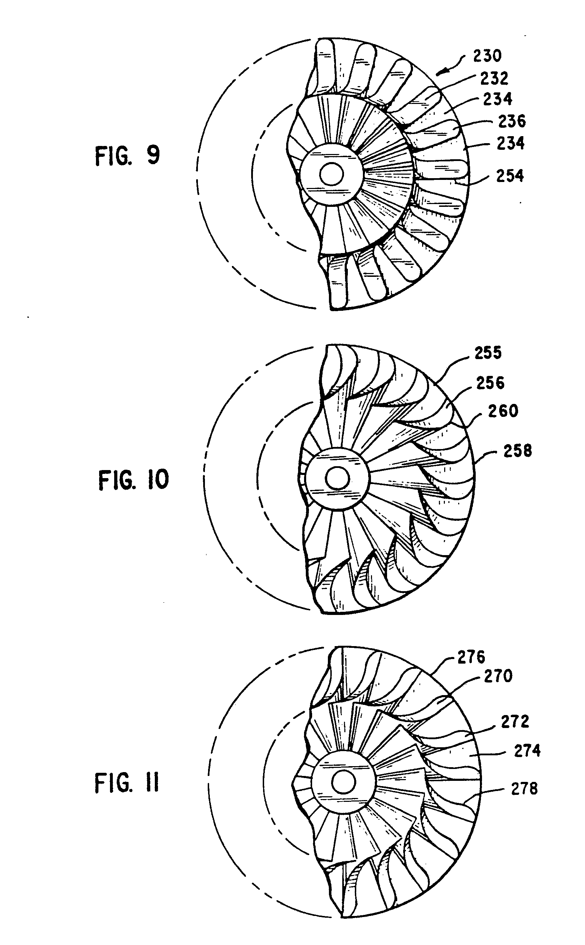

Referring now to Fig. 5, a standard turbomachine compressor rotor 84 as known in the prior art includes an axially oriented flow section 86 and a radially oriented flow section 88 with a plurality of thin walled vanes 90 coacting to form fluid passageways 92. However, as readily apparent from Fig. 5, the thin walled vanes 90 result in ever widening passageways with an increasing vane-to-vane spacing $d$. Accordingly, said passageways steadily increase in width $d$ proportional to the distance from the axis 94 of the rotor and have no reference station as disclosed herein.

Referring to the graph of Fig. 6, a compressor map X depicting the useful operating range (shown in solid lines) of the unimproved turbomachine (see Fig. 5), has been superimposed over a similar compressor map Y depicting the useful operating range (shown in broken lines) of an improved turbomachine (see Fig. 2). The increase in the useful operating range of the improved turbomachine is readily apparent. As explained earlier, the useful operating range of a turbomachine is limited by two phenomena known as choke and surge. Choke limits the maximum amount of fluid mass flow which can pass through a compressor, and surge limits the minimum stable fluid mass flow rate which can be obtained at a given pressure ratio. Accordingly, the turbomachine should be operated between these two limits to maintain acceptable efficiencies and stable operation. The pressure ratio is outlet pressure divided by inlet pressure (ordinate in the graph of Fig. 6), and varies typically from one to four, but may be larger. The mass flow rate is the mass of fluid passing through the turbomachine per unit of time (abscissa in the graph of Fig. 6), and varies according to the particular rotor design. As demonstrated in Fig. 6, using turbomachines with comparable mass flow rates and efficiencies, both turbomachines have similar mass flow rates in the higher flow range, yet the improved rotor has significantly expanded the range of mass flow rates at lower mass flows. This results in significantly improved ratios of choke mass flow rates to surge mass flow rates at any given pressure ratio.

The use of an improved turbomachine as described by the teachings herein can provide many advantages to overall system operation in a variety of applications. To illustrate some of these advantages, consider such a turbomachine used as a compressor in two different systems using turbo compressors: engine turbocharging and motor driven air compressors.

When an improved turbomachine as described herein is used as a compressor on an engine turbocharger, the wider allowable range of mass flow rates allows a wider range of engine speeds within the turbocharger's stable operating range. This allows a smaller number of transmission gear ratios when such an engine is used in traction service. In addition, when such a compressor is used with a variable geometry turbine in a turbocharger, a greater flexibility in torque curve shaping exists along with the capability to run the engine at higher torque levels over a broader speed range. In addition, the low mass flow rate placement of the compressor surge line allows the operation of the engine at high altitudes without encountering compressor surge as a limiting constraint.

When an improved turbomachine as described herein is used in the compressor stage of motor driven air compressor systems, a great reduction in partial output power requirements can be achieved. When a conventional system is used, for instance, as a plant air supply, the system is sized to provide the maximum flow rate required at the desired system pressure. Many of these systems operate a considerable amount of the time at conditions that demand a very small fraction of the system's maximum output capability, or even in a standby mode. If such a system is used with conventional compressors designed with the previous state-of-the-art knowledge, the lack of compressor stability at low mass flow rates requires the machine to operate at high mass flow rates even when system demand is low. This results in wasted energy consumption and the extra mass flow above system demand is discharged to the surroundings. During such times the wide range of the improved compressor disclosed herein allows stable operation of the system at the desired output pressure and low mass flows, thus lowering overall system power consumption while retaining the ability to provide higher mass flow rates at the desired pressure.

It is, of course, obvious that although most of the discussion presented thus far relates to the use of such a turbomachine as a compressor, the relationships described herein are not affected by the direction of fluid flows through the rotor. Thus, the concepts presented herein are as applicable to radial inflow turbines as they are to axial inflow compressors.

When the turbomachine is operated as a turbine with a radial inflow and axial outflow, the inlet gas flow angles relative to the wheel vary substantially and rapidly, even during steady state operation. These variations occur on the order of milliseconds and may result in part from a pulsating fluid source, such as the exhaust flow of an internal combustion engine.

Fig. 7 is a fragmentary perspective top view of the radial portion of a standard turbomachine rotor 200 having vanes 202 extending thereacross forming, in part, fluid passageways 204. Said vanes are thin and generally flat at their peripheral ends 205. The incoming fluid is diagrammatically depicted as 206 and 208, to represent two of the various angles of incidence. These variations in relative gas inlet angle produce undesirable areas of fluid separation 210 from the vane 202 in the radial portion of the wheel as the fluid flows over the peripheral ends 205. These separation zones are believed to extend the length of the entire fluid passageway 204 under certain conditions, thereby limiting operation ranges.

Referring now to Figs. 8 and 9, an improved turbomachine rotor 230 has a vane 232 extending thereacross forming, in part, fluid passageways 234. To suppress inlet separation, the vane end 236 at the periphery of the wheel has a generally rounded or blunt air foil shape which smoothly merges with the vane. This shape generally conforms to the air flow, diagrammatically shown as 238, thereby reducing separation and increasing the off-design mass flow. The rounded vane end is used in conjunction with a reference station 254 as earlier disclosed, and the wide vanes associated therewith permit a maximum radius of curvature at the vane end to minimize separation. If the angles of incidence vary widely, the rounded vane end 236 preferably assumes a generally semi-circular cross section to accommodate a variety of said angles. Said vanes, as well as those in Figs. 10 and 11, may be hollow or solid, as compatible with other design requirements or desires.

Referring now to Fig. 10, an alternative embodiment or a rotor 255 having a rounded vane end 256 is disclosed. If the angles of incidence of the incoming fluid are generally confined to a smaller known range of variations, the rounded vane ends 256 may be curved into the incoming fluid to permit a maximum radius of curvature to minimize separation. The wheel 258 also includes a reference station 260.

Referring now to Fig. 11, a still further alternative embodiment of a rotor 276 is disclosed. The vane 270 has a rounded, partially circular vane end 272, and the passageway 274 is widened to accommodate a higher mass flow rate at relatively high rotor speeds. The wheel also includes a reference station 278.

Referring to Fig. 12, a graph of mass flows versus rotor speeds compares a standard turbomachine at line 1, to the improved turbomachines incorporating the rotors of Figs. 7—9. All of the improved wheels demonstrate significant off-design increases in mass flows, and the different designs permit one to optimize performance over a limited range or the entire range of operations.

## Claims

1. A turbomachine for compressible fluids comprising a rotor (30) mounted for rotation about a substantially central transverse axis (x), said rotor including a hub (36), and a plurality of vanes (42) mounted on and projecting from one surface of said hub, each vane being between the rotor axis and the rotor periphery and having a generally rounded vane end at said periphery smoothly merging with said vane, adjacent vanes coacting to define at least in part a fluid passageway (46) having a generally axially oriented section (14) adjacent the rotor axis and a generally radially oriented section (16) extending from said axially oriented section to the rotor periphery; characterised in that a predetermined number of passageways are provided, each having a reference station (54) within the radially oriented section thereof and upstream of the passageway exit, said reference station being a generally convex protrusion from said vane into said passageway oriented to reduce said passageway in the tangential dimension only, thereby reducing vane-to-vane spacing only, the passageway height or axial dimension at said reference station being increased to compensate for the passageway area reduction which would have been caused by solely reducing the tangential dimension, the passageway configuration at said reference station having a mean tangential dimension that is no more than about 60% of the mean circumference of the rotor measured at said reference station divided by the number of vanes intersecting said circumference.

2. A turbomachine according to claim 1 wherein the rotor (30) is mounted within a circular cavity (13) formed in a housing (12), having a generally axially oriented flow port section (11) and a generally radially oriented flow port section (18), said sections communicating with said cavity.

3. A turbomachine according to claim 2 wherein one end of each vane (42) is disposed adjacent one flow port section and an opposite end of each vane is disposed adjacent the other flow port section.

4. A turbomachine according to claim 1 wherein the passageway configuration at each reference station (54) has an axial dimension that exceeds the tangential dimension.

5. A turbomachine according to claim 1 wherein one surface portion of each of the vanes (42) disposed within the radially oriented passageway section has a generally convex configuration (52A) and is adjacent a pressure side of the fluid flow through the radially oriented passageway section, and one surface portion of each of the vanes disposed within the axially oriented passageway section has a generally concave configuration (52) and is adjacent a pressure side of the fluid flow through the axially oriented passageway section.

6. A turbomachine according to claim 1 wherein a portion of each passageway (46) extending from the generally axially oriented section (14) to the reference station (54) has a mean tangential dimension decreasing towards the mean tangential dimension at said reference station.

7. A turbomachine according to claim 1 wherein a portion of each passageway (46) extending from the reference station (54) to the rotor periphery has an increasing mean tangential dimension relative to the mean tangential dimension at said reference station.

8. A turbomachine according to claim 1 wherein a portion of each vane (42) starting from the axially oriented section (14) to the reference station (54) has an increasing tangential cross-sectional area.

9. A turbomachine according to claim 2 wherein each passageway (46) extending from one flow port section (11) to the other flow port section (18) is substantially continuous and undivided.

10. A turbomachine according to claim 2 wherein the vanes (42) of said rotor (30) sealingly engage cavity-forming surfaces of said housing (12).

11. A turbomachine according to claim 1 wherein the vanes (42) are symmetrically arranged on said hub surface (36) and said reference stations (54) are uniformly spaced from the rotor axis (x).

12. A turbomachine according to claim 1 wherein the edges of said vanes (42) spaced from the hub surface (36) are fixedly secured to an imperforate shroud whereby said shroud, said vanes and said hub surface coact to form said fluid passageways.

13. A turbomachine according to claim 1 wherein each vane end adjacent the rotor periphery has a generally semi-circular cross-sectional configuration.

14. A turbomachine according to claim 2 wherein the generally radially oriented flow port section (18) constitutes a flow inlet section and each vane end adjacent the rotor periphery is curved toward the direction of the incoming fluid relative to the vane.

15. A turbomachine according to claim 1 wherein a portion of each passageway (46) extending from the generally axially oriented section (14) to the reference station (54) has a mean tangential dimension decreasing towards the mean tangential dimension at said reference station and a portion of each passageway extending from the reference station to the rotor periphery has an increasing mean tangential dimension relative to the mean tangential dimension at said reference station.

**Patentansprüche**

1. Turbomaschine für kompressible Fluids, mit einem Rotor (30), der derart montiert ist, daß er um eine im wesentlichen zentrale Querachse (x) drehbar ist, wobei dieser Rotor eine Nabe (36) aufweist sowie mehrere Flügel (42), die an der Nabe angebracht sind und von einer Oberfläche dieser Nabe abstehen, wobei sich jeder Flügel zwischen der Rotorachse und dem Rotorumfang befindet und am Umfang ein im wesentlichen abgerundetes Flügelende aufweist, welches sanft in den Flügel übergeht, und wobei benachbarte Flügel zusammenwirken, um zumindest teilweise einen Fluidkanal (46) zu definieren, welcher einen im wesentlichen axial orientierten Abschnitt (14) angrenzend an die Rotorachse aufweist sowie einen im wesentlichen radial orientierten Abschnitt (16), der sich von dem axial orientierten Abschnitt zum Rotorumfang erstreckt, dadurch gekennzeichnet, daß eine vorgegebene Anzahl von Kanälen vorgesehen ist, von denen jeder in seinem radial orientierten Abschnitt und stromaufwärts von dem Kanalauslaß eine Referenzstation (54) aufweist, welche ein im wesentlichen konvexer, von dem Flügel in den Kanal vorstehender Vorsprung ist, der so ausgebildet ist, daß er den Kanal nur in seiner tangentialen Abmessung reduziert, wodurch nur der Abstand zwischen den Flügeln verringert wird, während die Kanalhöhe oder axiale Abmessung an der Referenzstation erhöht wird, um die Verringerung der Kanal (Querschnitts)-Fläche, welche andernfalls durch die alleinige Reduzierung der tangentialen Abmessung verursacht würde, zu kompensieren, wobei die Kanalform an der Referenzstation eine mittlere tangentiale Abmessung hat, die nicht größer ist als etwa 60% des mittleren Umfangs des Rotors, gemessen an der Referenzstation und geteilt durch die Anzahl der Flügel, die den Umfang schneiden.

2. Turbomaschine gemäß Anspruch 1, bei der der Rotor (30) in einem kreisrunden Hohlraum (13) montiert ist, der in einem Gehäuse (12) ausgebildet ist, welches einen im wesentlichen axial orientierten Strömungsöffnungsabschnitt (11) und einen im wesentlichen radial orientierten Strömungsöffnungsabschnitt (18) aufweist, wobei diese Abschnitte mit dem Hohlraum (12) in Verbindung stehen.

3. Turbomaschine nach Anspruch 2, bei der ein Ende jedes Flügels (42) angrenzend an einen Strömungsöffnungsabschnitt angeordnet ist und bei der ein gegenüberliegendes Ende jedes Flügels angrenzend an den anderen Strömungsöffnungsabschnitt angeordnet ist.

4. Turbomaschine nach Anspruch 1, bei der die Kanalform an jeder Referenzstation (54) eine axiale Abmessung hat, welche größer ist als die tangentiale Abmessung.

5. Turbomaschine nach Anspruch 1, bei der ein Oberflächenbereich jedes der Flügel (42), welcher in dem radial orientierten Kanalabschnitt liegt, eine im wesentlichen konvexe Gestalt (52A) aufweist und angrenzend an die Druckseite der durch den radial orientierten Kanalabschnitt fließenden Fluidströmung vorgesehen ist, und bei der ein Oberflächenbereich jedes der Flügel, welcher innerhalb des axial orientierten Kanalabschnitts liegt, eine im wesentlichen konkave Gestalt (52) aufweist und angrenzend an die Druckseite der durch den axial orientierten Kanalabschnitt strömenden Fluidströmung vorgesehen ist.

6. Turbomaschine nach Anspruch 1, bei der ein Teil jedes Kanals (46), der sich zwischen den im wesentlichen axial orientierten Abschnitt (14) und der Referenzstation (44) erstreckt, eine mittlere tangentiale Abmessung besitzt, die in Richtung auf die mittlere tangentiale Abmessung an der Referenzstation abnimmt.

7. Turbomaschine nach Anspruch 1, bei der ein Teil jedes Kanals (46), welcher sich von der Referenzstation (54) zum Rotorumfang erstreckt, bezogen auf die mittlere tangentiale Abmessung an der Referenzstation eine zunehmende mittlere tangentiale Abmessung aufweist.

8. Turbomaschine nach Anspruch 1, bei der ein Teil jedes Flügels (42), welcher von dem axial orientierten Abschnitt (14) ausgeht und bis zu der Referenzstation (54) reicht, eine zunehmende tangentiale Querschnittsfläche besitzt.

9. Turbomaschine nach Anspruch 2, bei der jeder Kanal (46), der von einem Strömungsöffnungsabschnitt (11) zu dem anderen Strömungsabschnitt (18) reicht, im wesentlichen kontinuierlich und nicht geteilt ist.

10. Turbomaschine nach Anspruch 2, bei der die Flügel (42) des Rotors (30) die den Hohlraum bildenden Oberflächen des Gehäuses (12) dichtend erfassen.

11. Turbomaschine nach Anspruch 1, bei der die Flügel an der Nabenoberfläche (36) symmetrisch angeordnet sind und bei der die Referenzstationen in gleichmäßigem Abstand von der Rotorachse (x) angeordnet sind.

12. Turbomaschine nach Anspruch 1, bei der die von der Nabenoberfläche (36) abgewandten Enden der Flügel (42) fest mit einer nicht perforierten Schürze verbunden sind, derart, daß die Schürze, die Flügel und die Nabenoberfläche zur Bildung der Fluidkanäle zusammenwirken.

13. Turbomaschine nach Anspruch 1, bei der jedes an das Rotorende angrenzende Flügelende eine im wesentlichen halbkreisförmige Querschnittsform besitzt.

14. Turbomaschine nach Anspruch 2, bei der der im wesentlichen radial orientierte Strömungsöffnungsabschnitt (18) einen Strömungseinlaßabschnitt bildet und bei der jedes der an den Rotorumfang angrenzenden Flügelenden bezuglich des betreffenden Flügels in Richtung auf das eintretende Fluid gekrümmt ist.

15. Turbomaschine nach Anspruch 1, bei der ein Teil jedes der Kanäle (46), welcher von dem im wesentlichen axial orientierten Abschnitt (14) zu der Referenzstation (54) reicht, eine mittlere tangentiale Abmessung besitzt, die in Richtung auf die mittlere tangentiale Abmessung an der Referenzstation abnimmt und bei der ein Teil jedes der Kanäle, welche von der Referenzstation zu dem Rotorumfang reicht, eine zunehmende mittlere tangentiale Abmessung bezüglich der mittleren tangentialen Abmessung an der Referenzstation besitzt.

**Revendications**

1. Turbomachine pour fluides compressibles comprenant un rotor (30) monté en rotation autour d'un axe transversal (x) sensiblement central, ledit rotor comprenant un moyeu (36) et un certain nombre d'ailettes (42) montées sur une surface dudit moyeu et faisant saillie sur elle, chaque ailette se trouvant entre l'axe du rotor et la périphérie du rotor et ayant une extrémité d'ailette généralement arrondie à ladite périphérie s'unissant régulièrement avec ladite ailette, les ailettes voisines agissant de façon à définir au moins en partie un passage (46) pour le fluide, ayant une section (14) orientée de façon généralement axiale au voisinage de l'axe du rotor et une section (16) orientée de façon généralement radiale s'étendant depuis ladite section orientée axialement vers la périphérie du rotor, caractérisée en ce qu'un nombre prédéterminé de passages sont prévus, ayant chacun une station de référence (54) dans la section orientée radialement correspondante et en amont de la sortie du passage, ladite station de référence étant une saillie généralement convexe sur ladite ailette dans ledit passage, orientée de façon à réduire ledit passage dans sa dimension tangentielle seulement, en réduisant ainsi uniquement l'espace d'une ailette à une autre ailette, la hauteur du passage ou la dimension axiale à ladite station de référence étant augmentée pour compenser la réduction de surface de passage qui pourrait être provoquée seulement par une réduction de la dimension tangentielle, la configuration du passage à ladite station de référence ayant une dimension tangentielle moyenne qui n'est pas plus de 60% environ de la circonférence moyenne du rotor mesurée à ladite station de référence divisée par le nombre d'ailettes coupant ladite circonférence.

2. Turbomachine selon la revendication 1, dans laquelle le rotor (30) est monté dans une cavité circulaire (13) formée dans une enveloppe 12 ayant une section ouverte (11) pour le débit orienté généralement de façon axiale et une section ouverte (18) pour le débit orienté de façon généralement radiale, lesdites sections communiquant avec ladite cavité.

3. Turbomachine selon la revendication 2, dans laquelle une extrémité de chaque ailette (42) est disposée au voisinage d'une section ouverte pour le débit et l'extrémité opposée de chaque ailette est disposée au voisinage de l'autre section ouverte pour le débit.

4. Turbomachine selon la revendication 1, dans laquelle la configuration des passages à chaque station de référence (54) a une dimension axiale qui dépasse la dimension tangentielle.

5. Turbomachine selon la revendication 1, dans laquelle une partie de la surface de chacune des ailettes (42) disposée dans une section de passage orientée radialement a une configuration généralement convexe (52A) et est voisine du côté de la pression du débit du fluide dans la section du passage orienté radialement, et une partie de la surface de chacune des ailettes disposée dans la section de passage orientée axialement a une configuration généralement concave (52) et est voisine du côté pression du débit du fluide dans la section de passage orientée axialement.

6. Turbomachine selon la revendication 1, dans laquelle une partie de chaque passage (46) s'étendant depuis la section (14) orientée de façon généralement axiale vers la station de référence (54) a une dimension tangentielle moyenne décroissant vers la dimension tangentielle moyenne à ladite station de référence.

7. Turbomachine selon la revendication 1, dans laquelle une partie de chaque passage (46) s'étendant depuis la station de référence (54) vers la périphérie du rotor a une dimension tangentielle moyenne croissante par rapport à la dimension tangentielle moyenne à ladite station de référence.

8. Turbomachine selon la revendication 1, dans laquelle une partie de chaque ailette (42) démarrant à la section (14) orientée axialement vers la station de référence (54) a une section transversale tangentielle croissante.

9. Turbomachine selon la revendication 2, dans laquelle chaque passage (46) s'étendant depuis une section ouverte (11) pour le débit vers l'autre section ouverte (18) pour le débit est sensiblement continu et non divisé.

10. Turbomachine selon la revendication 2, dans laquelle les ailettes (42) dudit rotor (30) s'engagent de façon étanche dans les surfaces formant des cavités de ladite enveloppe (12).

11. Turbomachine selon la revendication 1, dans laquelle les ailettes (42) sont disposées symétriquement sur ladite surface (36) du moyeu, et lesdites stations de référence (54) sont écartées uniformément de l'axe (x) du rotor.

12. Turbomachine selon la revendication 1, dans laquelle les extrémités desdites ailettes (42) écartées de la surface (36) du moyeu sont fixées à demeure sur un capot non perforé, ledit capot, lesdites vannes et ladite surface de moyeu agissant ensemble de façon à former lesdits passages pour le fluide.

13. Turbomachine selon la revendication 1, dans laquelle chaque extrémité d'ailette au voisinage de la périphérie du rotor a une configuration en coupe généralement semi-circulaire.

14. Turbomachine selon la revendication 2, dans laquelle la section ouverte (18) pour le débit orientée de façon généralement radiale constitue une section d'entrée du débit, et chaque extrémité d'ailette au voisinage de la périphérie du motor est courbée en direction du fluide entrant par rapport à l'ailette.

15. Turbomachine selon la revendication 1, dans laquelle une partie de chaque passage (46) s'étendant depuis la section (14) orientée de façon généralement axiale vers la station de référence (54) a une dimension tangentielle moyenne décroissant vers la dimension tangentielle moyenne à ladite station de référence, et une partie de chaque passage s'étendant depuis la station de référence vers la périphérie du rotor a une dimension tangentielle moyenne croissante par rapport à la dimension tangentielle moyenne à ladite station de référence.

FIG. 1

FIG. 2

FIG. 2A

0016819

FIG. 3

FIG. 5

FIG. 4

2

FIG. 6

FIG. 7

FIG. 8

FIG. 12

MASS FLOW VS. ROTOR SPEED COMPARSION
1.—STANDARD TURBOMACHINE OF FIG. 5
2.—IMPROVED TURBOMACHINE OF FIG. 10
3.—IMPROVED TURBOMACHINE OF FIG. 9
4.—IMPROVED TURBOMACHINE OF FIG. 11

INCREASING MASS FLOW RATE (LBS./MIN)

INCREASING ROTOR SPEED (RPM) ⟶

4

FIG. 9

FIG. 10

FIG. 11